# EUROPEAN PATENT APPLICATION

(11) **EP 1 160 281 A1**
(43) Date of publication of application: **05.12.2001**
(21) Application number: 00128632.7
(22) Date of filing: 28.12.2000
(51) Int. Cl.: C08L 23/10

(54) **Polypropylene resin composition**

(30) Priority: 19.05.2000 KR 2000026938
(71) Applicant: HYUNDAI MOTOR COMPANY, Jongro-ku, Seoul 110-793 (KR); LG-Caltex Co., LTD, Seoul (KR)
(72) Inventor: Jung, Soon-Joon, Whasung-kun, Kyungki-do (KR); Hur, Dong Soo, Seoul (KR); Kim, In Bok, Yusung-ku, Daejeon (KR); Choi, Jae Rim, Yusung-ku, Daejeon (KR)
(74) Representative: TER MEER STEINMEISTER & PARTNER GbR

(57) **Abstract**

The present invention relates to a polypropylene resin composition and more specifically, to a polypropylene resin composition comprising;
a propylene polymer comprising a high-crystalline propylene monomer having larger than 96% of pentade fraction (%mmmm) alone or mixed with propylene-ethylene copolymer with limit viscosity [η] larger than 3.0dl/g;
an ethylene α-olefin copolymer rubber wherein propylene or higher than C₄ α-olefin is mixed with ethylene;
a modified polypropylene, a polyolefin polyol, or a mixture polymer thereof containing polar groups; and
an inorganic filler.

The polypropylene resin composition according to the present invention provides superior physical properties such as impact resistance, rigidity and fluidity. Further, it has a good adhesion cartelistic to paints, so that direct painting is possible without any primer treatment. Accordingly, it can be used for automotive inner parts such as instrument panels and door trims, and components for household appliances such as refrigerator's back cover.

## Description

### BACKGROUND OF THE INVENTION

### Field of the Invention

The present invention relates to a polypropylene resin composition and more specifically, to a polypropylene resin composition comprising;
a propylene polymer comprising a high-crystalline propylene homopolymer having larger than 96% of pentade fraction (%mmmm) alone or mixed with propylene-ethylene block copolymer with limit viscosity [η] larger than 3.0dl/g;
an ethylene α-olefin copolymer rubber wherein propylene or higher than C₄ α-olefin is mixed with ethylene;
a modified polypropylene, a polyolefin polyol, or a mixture polymer thereof containing polar groups; and
an inorganic filler.

The polypropylene resin composition according to the present invention provides superior physical properties such as impact resistance, rigidity and fluidity. Further, it has a good adhesion cartelistic to paints, so that direct painting is possible without any primer treatment. Accordingly, it can be used for automotive inner parts such as instrument panels and door trims, and components for household appliances such as refrigerator's back cover.

Plastics used for automotive inner parts should have fundamental properties like impact resistance, chemical resistance and formability. Therefore, materials comprising polycarbonate and acrylonitrile-butadiene-styrene copolymer (ABS) mixture have been used. Although these resins have desirable physical properties, they are very expensive and their chemical resistance and recyclability are not so good as polyolefin resins, particularly, propylene resins. Therefore, they are gradually being replaced by polypropylene resin composition.

Polyolefin resins, such as polyethylene and polypropylene, are widely used for automotive outer parts like bumpers and inner parts like various fillers, due to their superior formability, impact resistance and chemical resistance, low specific gravity, and inexpensiveness. Especially, automotive inner parts like instrument panels require good adhesion property to plastic paints since painting is essential for good physical property balance, aesthetics and surface physical property.

However, since the polyolefin resins are nonpolar polymers with poor adhesion property to paints, a pretreatment process was indispensable. Currently, flame treatment, plasma treatment, UV exposure and primer treatment are used as surface pretreatment process. Usually, primer treatment using chlorinated polyolefin is used among others. The pretreatment process before painting increases cost and makes the work complicated. Also, the primer should be removed for recycling.

Accordingly, the development of resin composition with superior physical properties together with good adhesion property to paints is very important and urgently needed in the automotive industry.

### SUMMARY OF THE INVENTION

Though PC and ABS conventionally used for automotive inner parts have good physical properties, they are expensive. Polyolefin resins being highlighted as a replacement thereof have poor adhesion property to paints since they are nonpolar molecules. So, pretreatment before painting is indispensable.

The inventors tried to develop a polyolefin resin composition with the physical properties equivalent to those of PC and ABS, and superior adhesion property. As a result, the inventors have proposed an adhesion-improved polyolefin resin composition for inner parts like instrument panels [Korean Patent Publication No. 99-60955].

An object of the present invention is to provide a polypropylene resin composition with greatly improved impact resistance and rigidity from the proposed invention, requiring no primer treatment for painting.

### Detailed Description of the Invention

The present invention is characterized by a polypropylene resin composition comprising;
(A) 30 to 70wt.% of propylene polymer comprising 70 to 100wt.% of propylene homopolymer and 0 to 30wt.% of propylene-ethylene block copolymer;
(B) 10 to 30wt.% of α-olefin copolymer rubber mixed with ethylene-propylene copolymer rubber having 20 to 40wt.% of propylene and ethylene α-olefin copolymer rubber having 12 to 45wt.% of higher than C₄ α-olefin in the range of 1:4 to 4:1;
(C) 1 to 7wt.% of polar-group containing resin comprising modified polypropylene grafted to 0.5 to 10wt.% of graft ratio with unsaturated carbonic acid or its derivatives, polyolefin polyol having 20 to 80 (KOH mg/g) of hydroxyl value, or mixture thereof; and
(D) 10 to 40wt.% of inorganic filler.

The present invention is also characterized by a method for preparing automotive inner parts using said polypropylene resin composition, wherein primer pretreatment before painting is unnecessary.

Hereunder is given the detailed description of the present invention.

The polypropylene resin composition comprising components (A), (B), (C) and (D) according to the present invention have superior impact resistance, rigidity and fluidity. Also, their adhesion property to paints has been improved so that primer treatment process before painting may be unnecessary when they are used for automotive inner parts.

Hereunder is given the detailed description of each component comprising the polypropylene resin composition of the present invention.

### Component (A)

Polypropylene polymer (A) of the polypropylene resin composition according to the present invention is a crystalline polymer comprising a propylene homopolymer comprising propylene monomer as a main component alone or mixed with a propylene-ethylene block copolymer, wherein ethylene is included to.

Said propylene homopolymer is a high-crystalline polymer with higher than 96% of pentade fraction (%mmmm) measured with ¹³C-NMR, preferably higher than 96.5%, and more preferably higher than 97%. If the pentade fraction is lower than 96%, the rigidity and heat resistance of the polypropylene resin composition worsens. Also, the limit viscosity [η] of said polypropylene of the present invention measured in 135°C of decalin is in the range of 0.7 to 2.5dl/g, preferably in the range of 0.85 to 2.2dl/g, and more preferably in the range of 0.9 to 2.0dl/g. If the limit viscosity [η] is lower than 0.7dl/g, the impact resistance of the formed polypropylene resin composition worsens, and if it exceeds 2.5dl/g, the formability becomes poor, so that the quality of the finally formed product worsens and the working condition becomes poor.

Said propylene-ethylene block copolymer includes 3 to 20%, and preferably 5 to 15% of ethylene. The limit viscosity [η] of propylene-ethylene block copolymer of the present invention measured in 135°C of decalin is in the range of 3.0 to 5.0dl/g, preferably in the range of 3.0 to 4.5dl/g/ and more preferably in the range of 3.0 to 4.0dl/g. If the limit viscosity [η] is lower than 3.0dl/g, the impact resistance of the formed polypropylene worsens, and if it exceeds 5.0dl/g, there may be a problem of formability during processing.

For superior impact resistance and fluidity balance, the composition of propylene homopolymer and propylene-ethylene block copolymer of Component (A) of the present invention is recommended to be in the range of 70 to 100 : 30 to 0wt.%, and more preferably in the range of 80 to 100 : 20 to 0wt.%. While the propylene homopolymer provides superior rigidity and heat resistance, it has poor impact resistance. On the other hand, the propylene-ethylene copolymer comprising ethylene provides improved impact resistance, especially at a low temperature but it has poor formability, rigidity and heat resistance. Therefore, they can complement each other when mixed together.

The content of Component (A) to the entire polypropylene resin is recommended to be in the range of 30 to 70wt.%, more preferably in the range of 45 to 65wt.%. If it deviates this range, the impact resistance, formability, rigidity and heat resistance become poor, so that the quality of the final formed product is insufficient to be used for automotive inner parts.

### Component (B)

α-Olefin copolymer rubber (B) of the polypropylene resin composition of the present invention is added to increase the impact resistance by providing elasticity to the entire polypropylene resin composition. Especially, while the high crystallinity of Component (A) provides superior impact resistance, there is a large volume change due to the cooling after forming, so that the formed product may be cracked or bent to cause abrupt forming shrinkage during injection, and the low-temperature impact resistance becomes poor. α-Olefin copolymer rubber is added to prevent this. Component (B) is composed of a blend of ethylene-propylene copolymer rubber and ethylene α-olefin copolymer rubber having higher than C₄ α-olefins.

The ethylene-propylene copolymer rubber (EPR) includes 20 to 40wt.% of propylene, preferably 20 to 35wt.% of propylene. If the content of propylene is lower than 20wt.%, the impact resistance worsens, and if it exceeds 40wt.%, the rigidity worsens. And the melt index is recommended to be in the range of 0.3 to 10g/10min, preferably in the range of 0.5 to 5g/10min. If the melt index is smaller than 0.3g/10min, the dispersion becomes insufficient, and therefore, the appearance and mechanical properties become poor. Otherwise, if it exceeds 10g/10min, the impact resistance worsens.

α-Olefin copolymer rubber with higher than 4 carbon atoms in olefin is added to complement the poor rigidity of ethylene-propylene copolymer rubber. Mainly, ethylene butene-1 copolymer (EBM) and ethylene octene-1 copolymer (EOM) are used. For EBM, the content of C₄ (butene) is in the range of 12 to 25wt. %, preferably in the range of 15 to 20wt.%. The melt index is in the range of 0.5 to 10 g/10min, preferably in the range of 1 to 5 g/10min. For EOM, the content of C₈ (octane) is in the range of 15 to 45wt.%, preferably in the range of 25 to 35wt.%. The Mooney viscosity [η]_{ML1+4} (121 °C) is in the range of 1 to 50dl/g, preferably in the range of 1.5 to 31dl/g. The density is in the range of 0.86 to 0.91g/cm³, preferably in the range of 0.87 to 0.90g/cm³.

In particular, for Component (B) of the present invention, ethylene-propylene copolymer rubber (EPR) and ethylene α-olefin copolymer are mixed in the range of 20 to 80 : 80 to 20wt.%, preferably in the range of 60 to 80 : 40 to 20wt.% for the good of impact resistance and rigidity balance. If ethylene-propylene copolymer rubber (EPR) is used solely, the rigidity worsens; and if α-olefin copolymer is used solely, the impact resistance worsens.

The content of Component (B) to the entire polypropylene polymer is recommended to be in the range of 10 to 30wt.%, preferably in the range of 15 to 25wt.%. If the said content is below 10wt.%, the rigidity and formability worsen; and if it exceeds 30wt.%, the impact resistance worsens.

### Component (C)

The polar group-containing resin used for Component (C) of the polypropylene resin composition according to the present invention is added to provide a polar group to non-polar polypropylene, which requires primer pretreatment before painting. The polar group on the polymer surface improves its adhesion property to other polymers (paints) without primer treatment. For the polar-group containing resin of the present invention, modified polypropylene (modified PP) grafted with a carboxyl group on the side chain or polyolefin polyol with hydroxyl group at the terminal is used solely or together.

Firstly, the modified polypropylene of the present invention is prepared by grafting unsaturated carbonic acid or its derivatives to polypropylene. Here, the graft ratio is recommended to be in the range of 0.5 to 10.0wt.%, preferably in the range of 1.5 to 5.0wt.%. If the graft ratio is lower than 0.5wt.%, it can be scraped by external impact due to the poor adhesion to paint. Otherwise if it exceeds 10.0wt.%, the rigidity and impact strength may worsen. The unsaturated carbonic acid or its derivatives that can be used in the said graft reaction, is selected more than one from the group consisting of maleic acid, acrylic acid, *m*-acrylic acid, anhydrous maleic acid and dimethylol-*p*-octylphenol.

The polyolefin polyol of the present invention has very superior adhesion property to paints since polar hydroxyl (-OH) groups are bonded at both ends of the saturated carbohydrate backbone. The polyolefin polyol of the present invention is a low-molecular polymer with 10 to 16 poise (100°C) of viscosity, 20 to 80 KOH mg/g of hydroxyl value, and 150 to 200 carbon atoms in olefin. If the hydroxyl value of polyolefin polyol is lower than 20 KOH mg/g, the adhesion to paints worsens. Otherwise if it exceeds 80 KOH mg/g, though the adhesion to paints improves, the rigidity and impact resistance worsen due to ample hydroxyl groups on the surface.

The modified polypropylene and polyolefin polyol of Component (C) according to the present invention can be used solely or mixed together. When used solely, the modified polypropylene is recommended to be in the range of 1 to 10wt.%, preferably in the range of 1 to 5wt.% to the entire polypropylene composition; and the polyolefin polyol is recommended to be in the range of 1 to 5wt.%, preferably in the range of 1 to 3wt.% to the entire polypropylene composition. When the two components are mixed together, the content of the mixed resin is recommended to be in the range of 1 to 7wt.% to the entire polypropylene resin composition. If the content is lower than this range, the primer treatment is required due to a poor adhesion property, and if it exceeds this range, an impact property and rigidity may worsen.

### Component (D)

Inorganic filler (D) of the present invention is added to increase the tensile strength, rigidity and impact strength and further, reduce the cost of the polypropylene resin composition.

The inorganic filler of the present invention is selected from the group consisting of talc with average particle size of 0.5 to 7µm, barium sulfate, calcium carbonate and ulastonite. Especially, talc with smaller average particle size than 7µm is preferable in view of dispersion and other properties.

This inorganic filler is added in the range of 10 to 40wt.% to the entire polypropylene resin. If the content is lower than 10wt.%, the rigidity and heat resistance worsen, and if it exceeds 40wt.%, the impact strength worsens.

Other additives such as antioxidant, neutralizer and antistatic agent may be added within appropriate ranges. For antioxidants, phenolic antioxidant, phosphite antioxidant and thiodipropionate cynergist can be used. For neutralizers, calcium stearate and zinc oxide can be used. These and other additives are can be easily used by ones in the art.

As explained above, the polypropylene resin composition comprises component (A) of propylene homopolymer and propylene-ethylene block copolymer, component (B) of ethylene-propylene copolymer rubber and ethylene α-olefin copolymer rubber, Component (C) of modified polypropylene and polyolefin polyol, and Component (D) of an inorganic filler. Here, the final polypropylene resin composition with melt index in the range of 3 to 40g/10min provides superior workability, formability and other properties. If the melt index is lower than 3g/10min, the productivity may worsen and flow marks may appear on the final product. If it exceeds 40g/10min, the rigidity and impact strength may worsen.

A method for preparing polypropylene resin composition of the present invention is not limited particularly. For example, components (A), (B), (C) and (D) of the polypropylene resin composition according to the present invention can be prepared by conventional mechanical mixing method. To be specific, general melt mixing machines such as Bambury mixer, single-screw extruder, twin-screw extruder and multi-screw extruder can be employed. Here, the mixing temperature is recommended to be in the range of 170 to 240°C. For a forming process of the composition of the present invention, any one of extrusion forming, hollow forming, injection forming and sheet forming processes can be used. However, injection forming process fits the best.

The formed product prepared by using the polypropylene resin composition of the present invention can be directly painted as automotive inner parts without primer treatment. That is, after washing the formed product with organic solvent, modified acrylic or urethanic paints can be directly applied. The formed product painted without primer treatment provides equal or superior adhesion property compared to the primer-treated formed products. The eliminating of a pretreatment process may induce a cost reduction and primer removal process becomes unnecessary while recycling.

As explained above, the polypropylene resin composition of the present invention can be usefully employed for automotive inner parts such as instrument panels and door trims, because it provides superior impact resistance, rigidity, fluidity and particularly good adhesion property to paints.

Hereunder is given the description of the present invention using examples. However, the present invention is not limited by the given examples.

### Example

Components (A), (B), (C) and (D) were prepared as specified in the following Tables 1 to 5 in order to prepare the polypropylene resin composition.

### Component (A): Propylene Polymer

**Table 1.**

| **Propylene Homopolymer** | | | | |
|---|---|---|---|---|
| | Melt index (g/10min) | Intrinsic viscosity (dl/g) | Pentade fraction (%mmmm) | Average molecular weight |
| PP-1 | 8 | 1.9 | 97 | 51,000 |
| PP-2 | 14.5 | 1.3 | 97 | 45,000 |
| PP-3 | 65 | 0.9 | 97 | 32,000 |
| PP-1: Product of LG-Caltex Oil Corporation | | | | |
| PP-2: Product of LG-Caltex Oil Corporation | | | | |
| PP-3: Product of LG-Caltex Oil Corporation | | | | |

The intrinsic viscosity was measured using an Ubbeholde viscometer after completely melting propylene homopolymer in decalin at 135°C. The melt index was measured under the load of 2.16kg at 230°C according to ASTM D1238.

**Table 2.**

| **Ethylene-Propylene Block Copolymer** | | | | |
|---|---|---|---|---|
| | Melt index (g/10min) | E_{c}(wt.%) | R_{c} (wt.%) | [η] EP (dl/g) |
| PP-4 | 60 | 60 | 15 | 4.3 |
| PP-5 | 8 | 60 | 15 | 4.3 |
| PP-4: Product of LG-Caltex Oil Corporation | | | | |
| PP-5: Product of LG-Caltex Oil Corporation | | | | |

The ethylene content (E_{c}) in the propylene-ethylene copolymer and the xylene extract content (R_{c}) in the propylene-ethylene block copolymer were measured using FT-IR. The limit viscosity ([η] EP) of the extract was measured using an Ubbeholde viscometer.

### Component (B): Ethylene α-Olefin Copolymer Rubber

The following Table 3 shows characteristics of ethylene α-olefin copolymer of the present invention.

**Table 3**

| | Melt index (g/10min) | C_{c} (wt.%) | Mooney viscosity [η]_{NL1+4} |
|---|---|---|---|
| EPR-1¹⁾ | 3.5 | 31 | - |
| EPR-2 | 0.5 | 35 | - |
| EBM-1²⁾ | 2.7 | 20 | - |
| EOM-1³⁾ | 1.0 | 24 | 23 |
| EOM-2 | 5.0 | 24 | 8 |

| | | | |
|---|---|---|---|
| 1) EPR: Ethylene-propylene copolymer rubber. Product of Korea Kumho Petrochemical Co., LTD. | | | |
| 2) EBM: Ethylene-butene copolymer rubber | | | |
| 3) EOM: Ethylene-octene copolymer rubber. Product of Daw elastomer | | | |

The contents (C_{c}) of propylene, butylenes and octene which are comonomers of EPR, EBM and EOM were measured using FT-IR, and the Mooney viscosity was measured at 121°C according to ASTM D1646.

### Component (C): Polar-Group Containing Resin

The following Table 4 shows characteristics of polar-group containing resin of the present invention.

**Table 4**

| | F_{c} (wt.%) | Hydroxyl value (KOH mg/g) | Polar group |
|---|---|---|---|
| MPP | 1.5 | - | -COOH |
| Polyol | - | 45 | -OH |
| MPP: Modified polypropylene. Product of LG-Caltex Oil Corporation | | | |
| Polyol: Polyolefinpolyol. Product of Mitsui | | | |

The polar group content (F_{c}) of the polar-group containing resin was measured through titration method as the grafted polar group ratio to the main chain of polypropylene.

### Component (D): Inorganic Filler

The following Table 5 shows the characteristics of the inorganic filler (D) of the present invention.

**Table 5**

| | Average particle size (µm) |
|---|---|
| T-1 | 2.9 |
| T-2 | 7.6 |
| T: Talc. Product of Wangpyo Chemicals | |

Talc (T) was used for the inorganic filler, and the average particle size was measured with laser sedimentation method. After mixing the components of Tables 1 to 5 as in Table 6, the same was dry-blended for 3min using a Hensel mixer. The pellet of the resin composition was prepared after mixing the same using a two-axis extruder (diameter 45mm Φ) set at 190°C. Samples for measuring physical properties of the resin composition pellets were prepared using an injection forming machine set at 200°C.

**Table 6**

| Composition (wt.%) | | Examples | | | | Comparative Examples | | | | |
|---|---|---|---|---|---|---|---|---|---|---|
| | | 1 | 2 | 3 | 4 | 1 | 2 | 3 | 4 | 5 |
| (A) | PP-1 | 55 | 45 | - | - | 60 | 45 | 55 | 45 | 60 |
| | PP-2 | - | - | 40 | - | - | - | - | - | - |
| | PP-3 | - | - | - | 30 | - | - | - | - | - |
| | PP-4 | - | - | - | 20 | - | - | - | - | - |
| | PP-5 | - | 10 | 15 | - | - | 15 | | 10 | - |
| (B) | EPR-1 | 5 | 5 | 10 | 10 | 5 | 5 | 10 | | 20 |
| | EPR-2 | - | - | - | - | - | - | - | 10 | - |
| | EOM-1 | 10 | | 5 | 10 | 10 | 10 | - | 5 | - |
| | EOM-2 | - | 10 | - | - | - | - | 5 | - | - |
| (C) | Polyol | 3 | - | 2 | 2 | - | - | 3 | 3 | 3 |
| | MPP | - | 5 | 1 | - | - | 0.5 | - | - | - |
| (D) | T-1 | 27 | 25 | 27 | 27 | 25 | 25 | - | 27 | 17 |
| | T-2 | - | - | - | - | - | - | 27 | - | - |

### Experimental Example

Physical properties and workability of the formed product manufactured from the resin prepared by the present invention were tested. Tensile strength, impact strength, flexural strength, heat modification temperature and adhesion to paints were tested as follows. The result is given in Table 8.
(1) Melt index (g/10min)
   Measured under the load of 2.16kg at 230°C according to ASTM D1238.
(2) Izod impact resistance (kg·cm/cm)
   Measured at room temperature (23°C) and low temperature (-10°C) according to ASTM D256.
(3) Flexural modulus (kg/cm²)
   Measured according to ASTM D790.
(4) Heat modification temperature (°C)
   Measured according to ASTM D648.
(5) Paint adhesion test
   After applying modified acrylic paint (product of Samsung Chemicals) or urethanic paint (product of Samsung Chemicals) on the injection-formed samples, the same were left at room temperature over 48 hours after drying for 30min at 80°C. After drawing 11 horizontal and vertical lines on the painted surface using a cutter to make 10×10 cells with 2mm spacing, cellophane adhesive tape was applied and removed instantly. The disjoined degree of the samples was observed. Testing criteria for the adhesion are given in the following Table 7.

**Table 7.**

| **Testing Criteria for Paint Adhesion** | |
|---|---|
| Rating | Status |
| 10 | Both sides of the lines are thin and smooth, and there is no scraping at all on the intersection or in the square. |
| 8 | There is some scraping on the intersection, and no scraping in the square. The damaged area is less than 5% of the square. |
| 6 | There is scraping on both sides of the lines and intersection. The damaged area is in the range of 5-15% of the square. |
| 4 | There is scraping on the lines. The damaged area is in the range of 15 to 35% of the square. |
| 2 | The scraping on the lines is broader than Rating 4. The damaged area is in the range of 35 to 65% of the square. |
| 0 | The scarping area is larger than 65% of the square. |

**Table 8**

| Physical properties | | Examples | | | | Comparative Examples | | | | | |
|---|---|---|---|---|---|---|---|---|---|---|---|
| | | 1 | 2 | 3 | 4 | 1 | 2 | 3 | 4 | 5 | 6 |
| Melt index (g/10min) | | 9 | 8 | 10 | 18 | 8 | 7 | 9 | 4 | 5.2 | 14 |
| Impact resistance (kg·cm/ cm) | 23°C | 23 | 26 | 26 | 28 | 25 | 28 | 12 | 23 | 32 | 11 |
| | -10°C | 4.5 | 5.2 | 5.0 | 6.5 | 4.9 | 5.1 | 3.3 | 4.5 | 6.7 | 3.8 |
| Flexural elasticity (kg/cm²) | | 2400 0 | 2340 0 | 2600 0 | 2150 0 | 2680 0 | 2310 0 | 2370 0 | 2450 0 | 1850 0 | 2350 0 |
| Heat modification temperature (°C) | | 131 | 130 | 131 | 131 | 131 | 132 | 127 | 130 | 124 | 129 |
| Paint adhesion* | | 10/ 10 | 10/ 10 | 10/ 10 | 10/ 10 | 2/2 | 6/6 | 10/ 10 | 10/ 10 | 10/ 10 | 10/ 10 |

| | | | | | | | | | | | |
|---|---|---|---|---|---|---|---|---|---|---|---|
| *Modified acryls/urethane paints | | | | | | | | | | | |

As can be shown in Table 8, any of the resin compositions prepared by Examples 1 to 4 provides formed products with superior impact resistance, rigidity and paint adhesion property not requiring primer treatment. However, if there is no or few introduction of polar groups as in Comparative Examples 1 and 2, although the physical properties are good, the paint adhesion property worsens. In Comparative Example 3, the impact resistance worsens since the particle size of talc is large. In Comparative Example 4, the fluidity of the entire resin composition is poor since the melt index of ethylene α-olefin is very low. In Comparative Example 5, wherein propylene homopolymer was used solely, though the impact strength and heat resistance are good, the flexural elasticity is very low. In Comparative Example 6, overuse of modified PP lowered the entire physical properties.

As explained in detail above, the polypropylene resin composition of the present invention provides not only superior balance of impact resistance and rigidity but also good adhesion to paints, so that it can be used in broad applications, such as for automotive inner parts including instrument panels, and household appliances by directly painting it without primer treatment.

## Claims

**2.** A polypropylene resin composition comprising:
(A) 30 to 70wt.% of propylene polymer comprising 70 to 100wt.% of propylene homopolymer and 0 to 30wt.% of propylene-ethylene block copolymer;
(B) 10 to 30wt.% of α-olefin copolymer rubber mixed with ethylene-propylene copolymer rubber having 20 to 40wt.% of propylene and ethylene α-olefin copolymer rubber having 12 to 45wt.% of higher than C₄ α-olefin in the range of 1:4 to 4:1;
(C) 1 to 7wt.% of polar-group containing resin comprising modified polypropylene grafted to 0.5 to 10wt.% of graft ratio with unsaturated carbonic acid or its derivatives, polyolefin polyol having 20 to 80 (KOH mg/g) of hydroxyl value, or mixture thereof; and
(D) 10 to 40wt.% of inorganic filler.

**2.** The polypropylene resin composition according to claim 1, wherein said homopolymer included in said propylene polymer (A) has a pentade fraction (%mmmm) of larger than 96% measured by ¹³C-NMR and the limit viscosity of 0.7 to 2.5dl/g; and said propylene-ethylene block copolymer has a limit viscosity of 4.0 to 5.0dl/g.

**3.** The polypropylene resin composition according to claim 1, wherein the melt index of said ethylene-propylene copolymer rubber included in the said ethylene α-olefin copolymer rubber (B) is in the range of 0.3 to 10g/10min; and the melt index of the said ethylene α-olefin copolymer rubber having more than C₄ α-olefin is in the range of 0.5 to 10g/10min.

**4.** The polypropylene resin composition according to claim 1, wherein said unsaturated carbonic acid or its derivatives is a substance selected from the group consisting of maleic acid, acrylic acid, *m*-acrylic acid, anhydrous maleic acid and dimethylol-*p*-octylphenol, or a mixture thereof.

**5.** The polypropylene resin composition according to claim 1, wherein said polyolefin polyol contains 150 to 200 carbon atoms.

**6.** The polypropylene resin composition according to claim 1, wherein said inorganic filler (D) is selected from the group consisting of talc with average particle size of 0.5 to 7µm, barium sulfate, calcium carbonate and ulastonite.

**7.** A manufacturing process of automotive inner parts using the polypropylene resin composition according to claim 1, which is **characterized by** not requiring primer treatment.
